# EUROPÄISCHE PATENTSCHRIFT

(11) **EP 3 548 326 B1**
(45) Veröffentlichungstag und Bekanntmachung des Hinweises auf die Patenterteilung: **09.03.2022**
(21) Anmeldenummer: 17787167.0
(22) Anmeldetag: 19.10.2017
(51) Int. Cl.: B60K 28/06, B60K 28/10, B60W 50/00

(54) **NOTHALTEPUNKT EINES KRAFTFAHRZEUGS**
EMERGENCY STOP POINT OF A MOTOR VEHICLE
POINT D'ARRÊT D'URGENCE D'UN VÉHICULE AUTOMOBILE

(30) Priorität: 05.12.2016 DE 102016224157
(43) Veröffentlichungstag der Anmeldung: 09.10.2019
(73) Patentinhaber: Robert Bosch GmbH, 70442 Stuttgart (DE)
(72) Erfinder: MIELENZ, Holger, 73760 Ostfildern (DE)
(86) Internationale Anmeldenummer: PCT/EP2017/076708
(87) Internationale Veröffentlichungsnummer: WO 2018/103937

(56) Entgegenhaltungen:
- EP-A2- 2 390 862
- DE-A1-102012 008 090
- DE-A1-102014 213 171
- US-A1- 2013 018 549

## Beschreibung

Die Erfindung betrifft die Bestimmung eines Nothaltepunkts eines Kraftfahrzeugs. Insbesondere betrifft die Erfindung die Bestimmung eines Nothaltepunkts für ein Kraftfahrzeug mit hoch- oder vollautomatisierter Fahrfunktion.

### Stand der Technik

Ein Kraftfahrzeug ist dazu eingerichtet, auf einem Straßenverkehrsnetz gefahren zu werden. Das Kraftfahrzeug kann mittels einer Fahrfunktion teilweise oder vollständig automatisiert werden, sodass ein Fahrer des Kraftfahrzeugs von einer Längs- oder Quersteuerung des Kraftfahrzeugs entlastet werden kann. Je stärker die Fahrfunktion automatisiert ist, desto weniger ist der Fahrer mit dem Fahren des Kraftfahrzeugs befasst. Im höchsten Automatisierungsgrad kann das Kraftfahrzeug autonom fahren, wobei der Fahrer die Fahrfunktion üblicherweise nicht mehr überwacht und auch als Rückfallebene zumindest innerhalb eines vorbestimmten Zeitfensters nicht zur Verfügung steht.

Erleidet das Kraftfahrzeug einen Defekt, beispielsweise durch Verschleiß, Unfall oder einen Verarbeitungsfehler insbesondere der automatisierten Fahrfunktion, so kann es sinnvoll sein, das Kraftfahrzeug möglichst rasch anzuhalten. Mit dem Anhalten des Kraftfahrzeugs können jedoch zusätzliche Gefahren verbunden sein. Erstens kann das Kraftfahrzeug durch den Anhaltevorgang selbst einem erhöhten Schadensrisiko ausgesetzt sein, und zweitens können andere Verkehrsteilnehmer durch das angehaltene Kraftfahrzeug belästigt, behindert oder gefährdet werden.

In der Druckschrift DE 10 2012 008 090 A1 ist ein Verfahren zum Nothalt eines Kraftfahrzeuges offenbart, welches das Ausführen eines abgesicherten Nothaltemanövers ermöglicht.

In der Druckschrift DE 10 2014 213 171 A1 wird ein Verfahren offenbart, bei dem ein Fahrzeug in einen sicheren Zustand überführt wird, wenn eine Komponente der Fahrzeugsteuerung ausfällt.

Eine der vorliegenden Erfindung zugrunde liegende Aufgabe besteht darin, eine verbesserte Technik zum Anhalten eines Kraftfahrzeugs anzugeben. Die Erfindung löst diese Aufgabe mittels der Gegenstände der unabhängigen Ansprüche. Unteransprüche geben bevorzugte Ausführungsformen wieder.

Ein Verfahren zum Bestimmen eines Nothaltepunkts eines Kraftfahrzeugs umfasst Schritte des Bestimmens eines Fahrzustands des Kraftfahrzeugs; und des Bestimmens eines Nothaltepunkts im Bereich des Kraftfahrzeugs auf der Basis des Fahrzustands. Dabei wird der Nothaltepunkt derart bestimmt, dass ein Halterisiko am bestimmten Nothaltepunkt einen vorbestimmten Wert nicht übersteigt.

Der Nothaltepunkt ist ein Ort, an dem das Kraftfahrzeug angehalten werden kann. Dazu kann jeder übliche Haltepunkt verwendet werden, der beispielsweise zum verkehrsregelkonformen Anhalten des Kraftfahrzeugs im Normalbetrieb verwendet werden kann, etwa eine Haltebucht, eine Einfahrt oder ein Parkplatz. Ist das Anhalten aber aus einem Notzustand an Bord des Kraftfahrzeugs heraus motiviert, etwa einem technischen Defekt oder einem gesundheitlichen Problem eines Passagiers, so können zum Anhalten auch Orte verwendet werden, an denen das Anhalten nicht erlaubt oder nicht günstig ist. Das Anhalten des Kraftfahrzeugs kann in diesem Fall wichtiger befunden werden als eine mögliche Beeinträchtigung Anderer.

Vorteilhaft kann durch das beschriebene Auswählen des Nothaltepunkts ein Risiko, das durch das Anhalten des Kraftfahrzeugs entstehen könnte, unterhalb des vorbestimmten Werts gehalten werden. Ein Folgeschaden am Kraftfahrzeug oder einem anderen Verkehrsteilnehmer aufgrund des Anhaltevorgangs des Kraftfahrzeugs kann dadurch verringert oder vermieden werden. Durch das Minimieren des Halterisikos kann auch ein Verkehrsfluss im Bereich des Nothaltepunkts nur wenig oder gar nicht gestört werden.

Der Wert wird dabei in Abhängigkeit des Fahrzustands bestimmt. Insbesondere kann auf der Basis des Fahrzustands bestimmt werden, welche Punkte in der Umgebung des Kraftfahrzeugs noch sicher erreicht werden können.

Der Fahrzustand kann beispielsweise eine Geschwindigkeit des Kraftfahrzeugs umfassen. Liegt ein potentieller Nothaltepunkt nahe am Kraftfahrzeug, so kann das Anhalten an diesem Punkt mit einer erheblichen Verzögerung verbunden sein, die ein Risiko darstellen kann. Fährt das Kraftfahrzeug hingegen relativ langsam, so kann eine gleichstarke Verzögerung, die dann jedoch weniger lange anhält, unter Umständen in Kauf genommen werden. Eine maximal tolerierbare Verzögerung oder Beschleunigung des Kraftfahrzeugs in Längs- oder Querrichtung kann in Abhängigkeit von geltenden Umgebungsbedingungen wie etwa einer Griffigkeit eines Untergrunds bestimmt werden.

In einer weiteren Ausführungsform umfasst der Fahrzustand eine Dringlichkeit des Anhaltens. Werden beispielsweise zwei potentielle Nothaltepunkte identifiziert, von denen einer relativ nahe ist, dabei aber ein relativ hohes Halterisiko birgt, und der andere weiter entfernt ist, dabei aber ein niedrigeres Halterisiko aufweist, so kann der nähere Haltepunkt als Nothaltepunkt gewählt werden, falls die Dringlichkeit für das Anhalten so hoch ist, dass ein sicheres Erreichen des entfernteren Haltepunkts nicht gewährleistet ist. Die Dringlichkeit des Anhaltens kann beispielsweise von einem technischen Zustand des Kraftfahrzeugs abhängig sein. Ist etwa eine Antriebseinrichtung des Kraftfahrzeugs ausgefallen, so kann beispielsweise relativ genau bestimmt werden, wie weit das Kraftfahrzeug maximal noch rollen kann, bevor es ohnehin stillsteht. Die Dringlichkeit beschreibt dann notwendigerweise einen Haltepunkt innerhalb der maximalen Ausrollstrecke. Es kann günstiger sein, das Kraftfahrzeug früher abzubremsen als es ausrollen zu lassen, um das Halterisiko am Nothaltepunkt zu minimieren. Besteht in einem anderen Beispiel ein Defekt nur im Bereich der Außenbeleuchtung des Kraftfahrzeugs und die Dämmerung beginnt einzusetzen, so kann die Dringlichkeit für das Anhalten des Kraftfahrzeugs relativ niedrig sein, da das Kraftfahrzeug noch mehrere Minuten sicher ohne Beleuchtung gefahren werden kann.

Das Halterisiko am Nothaltepunkt kann ein Risiko für einen zusätzlichen Schaden am Kraftfahrzeug oder einem seiner Insassen umfassen. Kann beispielsweise kein weniger riskanter Nothaltepunkt gefunden werden als einer, der durch Befahren eines unbefestigten Banketts oder einer Böschung einer zuvor befahrenen Straße erreichbar ist, so kann durch den Anhaltevorgang oder den Aufenthalt des Kraftfahrzeugs am Nothaltepunkt eine zusätzliche Beschädigung des Kraftfahrzeugs eintreten. In diesem Sinne riskante Nothaltepunkte können beispielsweise unbefestigtes Gelände, ein stehendes oder fließendes Gewässer oder einen anderen Verkehrsweg umfassen.

In einer anderen Ausführungsform umfasst das Halterisiko am Nothaltepunkt ein Risiko für einen Schaden an einem weiteren Verkehrsteilnehmer. Hält das Kraftfahrzeug beispielsweise auf einer einspurigen Strecke an, so kann entgegenkommender oder folgender Straßenverkehr das zum Hindernis gewordene Kraftfahrzeug nicht rechtzeitig erkennen und mit ihm kollidieren. Dies kann insbesondere dann gelten, wenn die Sicht schlecht oder ein Untergrund wenig griffig ist.

Das Halterisiko am Nothaltepunkt kann auf der Basis von Umgebungsdaten des Nothaltepunkts aus Kartendaten bestimmt werden. Beispielsweise kann die Position des Kraftfahrzeugs bestimmt werden, etwa mittels Satellitennavigation, und daraufhin eine Anzahl Nothaltepunkte auf der Basis von Kartendaten im Bereich der bestimmten Position bestimmt werden. Befindet sich ein potentieller Nothaltepunkt etwa an einer Stelle, an der das angehaltene Kraftfahrzeug durch folgenden oder entgegenkommenden Verkehr nicht aus ausreichender Entfernung wahrgenommen werden kann, so kann das Halterisiko für diesen Nothaltepunkt erhöht sein. Auch wenn andere Verkehrsteilnehmer das am potentiellen Nothaltepunkt angehaltene Kraftfahrzeug nicht passieren können, ohne ihre Geschwindigkeit zu reduzieren oder auszuweichen, kann das Anhalterisiko als gesteigert bestimmt werden. Sollte der potentielle Nothaltepunkt im Bereich eines Verkehrsknotenpunkts liegen, beispielsweise einer Kreuzung, eines Bahnübergangs oder eines Fußgängerüberwegs (Zebrastreifen), so kann das Halterisiko erhöht sein, falls querender Verkehr behindert oder gefährdet werden könnte.

In einer weiteren Ausführungsform werden Umgebungsdaten des Nothaltepunkts abgetastet, wobei das Halterisiko am Nothaltepunkt auf der Basis der abgetasteten Umgebungsdaten bestimmt wird. So können insbesondere dynamische Gegebenheiten, die auf das Halterisiko am Nothaltepunkt Einfluss haben können, bestimmt werden. Die Umgebungsdaten können beispielsweise eine Sichtbehinderung durch Randbebauung, geparkte Kraftfahrzeuge oder Vegetation umfassen. Auch Verkehrsteilnehmer, insbesondere Fußgänger oder Radfahrer, die im Bereich des Nothaltepunkts oder zwischen dem Kraftfahrzeug und dem Nothaltepunkt anwesend sind, können mittels der Abtastung erfasst werden. Die erfassten Risikofaktoren können in die Bestimmung des Halterisikos am Nothaltepunkt eingehen.

Das Halterisiko am Nothaltepunkt kann ein Risiko eines zusätzlichen Schadens am Kraftfahrzeug, eines seiner Insassen oder eines anderen Verkehrsteilnehmers während des Anhaltevorgangs mit umfassen. Das Halterisiko kann daher insbesondere auch auf der Basis einer Abtastung einer Umgebung des Kraftfahrzeugs bestimmt werden. Folgt beispielsweise ein anderes Kraftfahrzeug dicht, so kann ein starkes Verzögern des Kraftfahrzeugs ein Unfallrisiko mit dem folgenden Kraftfahrzeug steigern. Kann davon ausgegangen werden, dass ein folgendes Kraftfahrzeug einen ausreichenden Sicherheitsabstand einhält, beispielsweise ca. 70 m bei einer Fahrgeschwindigkeit von ca. 50 km/h, so kann ein normalstarkes Verzögern in Kauf genommen werden. Unter anderen Umständen kann auch ein starkes Verzögern in Kauf genommen werden, beispielsweise wenn kein Kraftfahrzeug folgt und ein kein akzeptabler, weiter entfernter Haltepunkt zur Verfügung steht. Das Halterisiko kann auch auf der Basis von Umgebungsdaten bestimmt werden, die sich auf den Bereich zwischen dem Kraftfahrzeug und dem Nothaltepunkt beziehen.

Eine Vorrichtung zur Bestimmung eines Nothaltepunkts eines Kraftfahrzeugs umfasst eine Bestimmungseinrichtung, die zur Bestimmung eines Fahrzustands des Kraftfahrzeugs eingerichtet ist, und eine Verarbeitungseinrichtung, die dazu eingerichtet ist, auf der Basis des Fahrzustands einen Nothaltepunkt im Bereich des Kraftfahrzeugs zu bestimmen. Dabei ist die Verarbeitungseinrichtung dazu eingerichtet, den Nothaltepunkt derart zu bestimmen, dass ein Halterisiko am bestimmten Nothaltepunkt einen vorbestimmten Wert nicht übersteigt, wobei der Wert dabei in Abhängigkeit eines Fahrzustandes bestimmt wird.

Die Verarbeitungseinrichtung kann insbesondere einen programmierbaren Mikrocomputer oder Mikrocontroller umfassen. Dieser kann zur Ausführung wenigstens eines Teils des oben beschriebenen Verfahrens eingerichtet sein.

Merkmale oder Vorteile des Verfahrens beziehen sich daher auch auf die Vorrichtung und umgekehrt.

Die Verarbeitungseinrichtung kann in einer weiteren Ausführungsform ferner dazu eingerichtet sein, ein Anhalten des Kraftfahrzeugs am bestimmten Nothaltepunkt zu steuern. Dazu kann die Verarbeitungseinrichtung dazu eingerichtet sein, in eine Längs- oder Quersteuerung des Kraftfahrzeugs einzugreifen.

### Kurze Beschreibung der Figuren

Die Erfindung wird nun mit Bezug auf die beigefügten Figuren genauer beschrieben, in denen:
- Fig. 1: ein System mit einem Kraftfahrzeug auf einem Straßenverkehrsnetz;
- Fig. 2: ein Kraftfahrzeug; und
- Fig. 3: ein Ablaufdiagramm eines Verfahrens zum Bestimmen eines Nothaltepunkts eines Kraftfahrzeugs
darstellt.

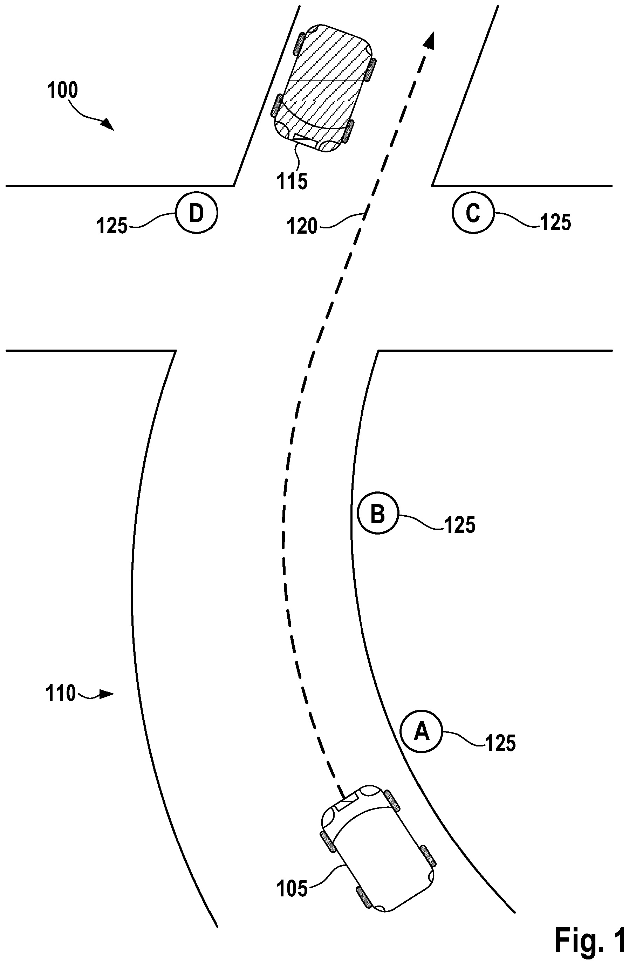

Figur 1 zeigt ein System 100 mit einem Kraftfahrzeug 105 auf einem exemplarischen Straßenverkehrsnetz 110. Das Kraftfahrzeug 105 verfügt bevorzugt über eine hoch- oder vollautomatisierte Fahrfunktion (HAF), um die Bewegung des Kraftfahrzeugs 105 auf dem Straßenverkehrsnetz 110 zumindest teilweise ohne Fahrerunterstützung zu steuern.

In der Darstellung von Figur 1 ist ein weiterer Verkehrsteilnehmer 115 exemplarisch als entgegenkommendes Kraftfahrzeug dargestellt. Andere Verkehrsteilnehmer 115 können jedoch auch beispielsweise einen Zug, einen Lastkraftwagen, einen Radfahrer, einen Fußgänger oder einen beliebigen anderen Verkehrsteilnehmer umfassen. Es ist zu beachten, dass der andere Verkehrsteilnehmer 115 dem Kraftfahrzeug 105 entgegenkommen, vorausfahren oder folgen kann, des Weiteren auch eine geplante Trajektorie 120 des Kraftfahrzeugs 105 queren oder beispielsweise auf diese einschränken kann.

Beispielsweise durch einen Verarbeitungsfehler oder einen Schaden an einem Element des Kraftfahrzeugs 105 kann es sinnvoll sein, das Kraftfahrzeug 105 insbesondere mittels der automatisierten Fahrfunktion in den Stillstand zu bringen. Dazu kann das Kraftfahrzeug 105 einen Nothaltepunkt 125 ansteuern, von denen mehrere exemplarische in Figur 1 eingezeichnet und mit den Großbuchstaben A bis D gekennzeichnet sind.

Sowohl mit dem Ansteuern eines Nothaltepunkts 125 als auch mit dem Aufenthalt am Nothaltepunkt 125 kann ein Risiko eines zusätzlichen Schadens verbunden sein. Dieser Schaden kann am Kraftfahrzeug 105 bzw. eines seiner Insassen oder an einem anderen Verkehrsteilnehmer 115 auftreten.

Gegebenenfalls kann der Schaden auch an einem Objekt im Bereich des Straßenverkehrsnetzes 110 entweder durch Ansteuern oder durch Aufenthalt am Nothaltepunkt 125 entstehen. Es wird daher vorgeschlagen, einen Nothaltepunkt 125 für das Kraftfahrzeug 105 derart zu bestimmen, dass ein mit dem Nothaltepunkt 125 verbundenes Halterisiko einen vorbestimmten Wert möglichst nicht übersteigt. Dazu können insbesondere mehrere Nothaltepunkte 125 im Bereich des Kraftfahrzeugs 105 identifiziert werden, deren Halterisiken dann miteinander verglichen werden. Bevorzugt wird ein Nothaltepunkt 125 ausgewählt, dessen zugeordnetes Halterisiko möglichst minimiert ist, während er gleichzeitig durch das Kraftfahrzeug 105 erreichbar ist. In weiteren Ausführungsformen kann auch berücksichtigt werden, dass der Nothaltepunkt 125 möglichst rasch oder möglichst komfortabel angefahren werden kann.

Der exemplarische Nothaltepunkt A liegt sehr nah am Kraftfahrzeug 105. Um den Nothaltepunkt A zu erreichen, muss das Kraftfahrzeug 105, falls es nicht bereits sehr langsam fährt, stark verzögern. Das Verzögern kann als risikosteigernd für einen Auffahrunfall eines nachfolgenden anderen Verkehrsteilnehmers 115 angesehen werden.

Der exemplarische Nothaltepunkt B liegt hinter einer Kurve, sodass ein dem Kraftfahrzeug 105 nachfolgender Verkehrsteilnehmer 115 das abgestellte Kraftfahrzeug 105 unter Umständen erst spät bemerken könnte. Das Risiko eines Folgeunfalls am Kraftfahrzeug 105 oder bewirkt durch das Kraftfahrzeug 105 am anderen Verkehrsteilnehmer 115 kann dabei erheblich sein.

Der weitere beispielhafte Nothaltepunkt C liegt abseits der Straße, den das Kraftfahrzeug 105 aufgrund der Trajektorie 120 ursprünglich benutzen wollte. Andererseits liegt dieser Nothaltepunkt C auf einer Querstraße, auf der ebenfalls mit anderen Verkehrsteilnehmern 115 zu rechnen sein könnte. Je nach zu erwartender oder bestimmter Verkehrsstärke auf der querenden Straße kann der Nothaltepunkt C jedoch immer noch ein geringeres Halterisiko als beispielsweise die Nothaltepunkte A oder B aufweisen.

Ähnliches gilt für den letzten exemplarisch dargestellten Nothaltepunkt D. Um diesen zu erreichen, ist jedoch zusätzlich ein Linksabbiegevorgang erforderlich, der als risikosteigernd angesehen werden kann. Der Nothaltepunkt D könnte daher ein größeres Halterisiko als der Nothaltepunkt C aufweisen.

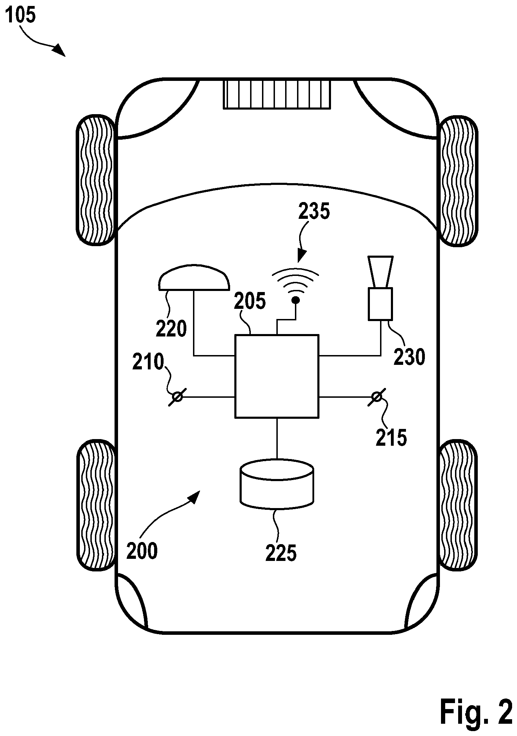

Figur 2 zeigt ein Kraftfahrzeug 105, insbesondere nach Beispiel des Kraftfahrzeugs 105 von Figur 1. An Bord des Kraftfahrzeugs 105 ist eine Vorrichtung 200 zur Bestimmung eines Nothaltepunkts 125 angebracht. Die Vorrichtung 200 umfasst bevorzugt eine Verarbeitungseinrichtung 205, die mit einer Bestimmungseinrichtung 210 zur Bestimmung eines Fahrzustands des Kraftfahrzeugs 105 verbunden ist. Die Bestimmungseinrichtung 210 ist hier als erste Schnittstelle dargestellt, die insbesondere mit einer Steuervorrichtung zur Steuerung des Kraftfahrzeugs 105 verbunden werden kann. Über die Schnittstelle 210 können insbesondere Daten bezogen werden, die auf eine Geschwindigkeit, eine Beschleunigung oder einen technischen Zustand des Kraftfahrzeugs 105 hinweisen. In einer anderen Ausführungsform kann mit der ersten Schnittstelle 210 auch ein entsprechender Sensor verbunden sein. Die Verarbeitungseinrichtung 205 ist dazu eingerichtet, auf der Basis des Fahrzustands bzw. der über die erste Schnittstelle 210 empfangenen Daten einen Nothaltepunkt 125 im Bereich des Kraftfahrzeugs 105 zu bestimmen. Dabei erfolgt die Bestimmung bevorzugt derart, dass das Halterisiko am bestimmten Nothaltepunkt 125 einen vorbestimmten Wert nicht übersteigt.

Die Verarbeitungseinrichtung 205 ist bevorzugt auch dazu eingerichtet, das Halterisiko des Nothaltepunkts 125 zu bestimmen. In einer weiter bevorzugten Ausführungsform ist die Verarbeitungseinrichtung 205 dazu eingerichtet, mehrere Nothaltepunkte 125 im Bereich des Kraftfahrzeugs 105 zu bestimmen, ihnen jeweils Halterisiken zuzuordnen und die Nothaltepunkte 125 bezüglich ihrer Halterisiken sowie gegebenenfalls ihrer Entfernungen vom Kraftfahrzeug 105 oder noch weiterer Kriterien zu beurteilen. Auf der Basis dieser Beurteilung wählt die Verarbeitungseinrichtung 205 bevorzugt einen Nothaltepunkt 125 aus. Ferner kann die Verarbeitungseinrichtung 205 dazu eingerichtet sein, das Kraftfahrzeug 105 zum bestimmten Nothaltepunkt 125 zu steuern. Dazu kann die Verarbeitungseinrichtung 205 insbesondere mit einer zweiten Schnittstelle 215 verbunden sein, die entweder mit einer Steuervorrichtung zur Steuerung einer Längs- oder Querbewegung des Kraftfahrzeugs 105 oder mit einem entsprechenden Aktuator zur Beeinflussung der Längs- oder Quersteuerung des Kraftfahrzeugs 105 verbunden werden kann. In einer weiteren Ausführungsform kann der bestimmte Nothaltepunkt 125 auch mittels der zweiten Schnittstelle 215 an eine externe Steuervorrichtung für das Kraftfahrzeug 105 übergeben werden.

Zur Bestimmung und/oder Bewertung eines Nothaltepunkts 125 bezüglich eines Halterisikos kann die Vorrichtung 200 über eine Positioniereinrichtung 220, bevorzugt in Verbindung mit einem Speicher 225 für Kartendaten, und/oder eine Abtasteinrichtung 230 zur Abtastung eines Außenbereichs des Kraftfahrzeugs 105 verfügen.

Die Positioniereinrichtung 220 kann insbesondere einen Empfänger für Signale eines Satellitennavigationssystems umfassen. Gegebenheiten in der Umgebung des Kraftfahrzeugs 105, insbesondere eine Straßenführung, Straßenklasse, die Lage von Verkehrsknotenpunkten wie einer Kreuzung oder einer Verkehrssteuereinrichtung wie einer Ampel und andere übliche Karteninformationen, wie sie auch beispielsweise zur Zielführung mittels eines Navigationssystems an Bord des Kraftfahrzeugs 105 üblich sind, können von den Kartendaten des Speichers 225 umfasst sein. In einer weiteren Ausführungsform können auch zusätzliche Informationen bezüglich eines Umfelds des Kraftfahrzeugs 105, beispielsweise eines Verkehrsaufkommens oder eines individuellen weiteren Kraftfahrzeugs 115, mittels einer drahtlosen Schnittstelle 235 empfangen werden.

Die Abtasteinrichtung 230 kann insbesondere optisch, per Radar oder LiDAR ein insbesondere in Fahrtrichtung vor dem Kraftfahrzeug 105 liegendes Gebiet abtasten. Es ist bevorzugt, dass die Verarbeitungseinrichtung 205 dazu eingerichtet ist, auf der Basis der mittels der Abtasteinrichtung 230 aufgenommenen Daten eine Objekterkennung durchzuführen, die insbesondere einen befahrbaren von einem nicht befahrbaren Bereich unterscheidet, und/oder ein Objekt wie einen anderen Verkehrsteilnehmer 115 oder ein stillstehendes Hindernis auf der Basis der Daten zu erkennen.

Es ist besonders bevorzugt, dass die Vorrichtung 200 dazu eingerichtet ist, einen Nothaltepunkt 125 auch bezüglich eines eigenen Fahrvermögens bzw. einer Dringlichkeit des Anhaltens zu bestimmen. Insbesondere können die über die erste Schnittstelle 210 empfangenen Fahrzustandsdaten des Kraftfahrzeugs 105 darauf hinweisen, welche Arten von Bewegungen oder Manövern mittels des Kraftfahrzeugs 105 überhaupt noch möglich sind und welche maximale Reichweite unter den geltenden Bedingungen angesetzt werden muss. Je dringlicher das Anhalten ist, desto höher kann ein tolerierbares Halterisiko eines erreichbaren Nothaltepunkts 125 sein. Allerdings ist bevorzugt, dass die Vorrichtung 200 versucht, innerhalb eines geltenden Aktionsradius möglichst den Nothaltepunkt 125 auszuwählen bzw. anzusteuern, der das geringste Halterisiko aufweist.

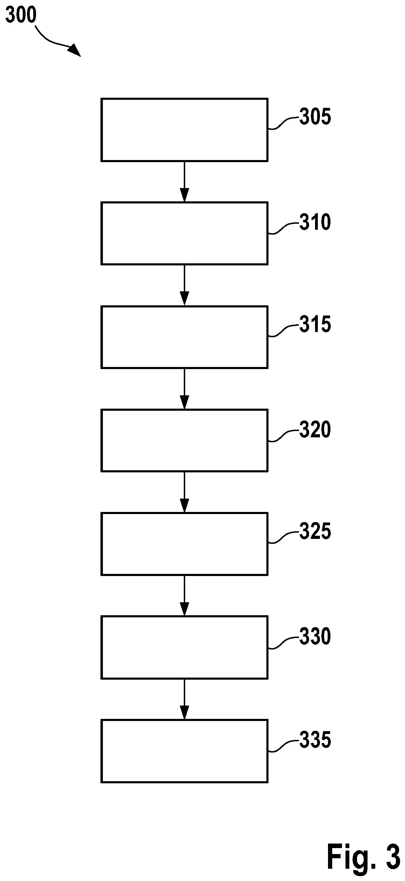

Figur 3 zeigt ein Ablaufdiagramm eines Verfahrens 300 zum Bestimmen eines Nothaltepunkts 125 für ein Kraftfahrzeug 105. Das Verfahren 300 kann wenigstens teilweise auf der Verarbeitungseinrichtung 205 der Vorrichtung 200 an Bord des Kraftfahrzeugs 105 von Figur 2 ausführbar sein. Es ist zu beachten, dass die vorliegende Reihenfolge von Schritten 305 bis 335 nicht verpflichtend ist. Außerdem können auch mehrere Schritte gleichzeitig durchgeführt werden, wie ein Fachmann sofort erkennt.

In einem Schritt 305 wird ein bevorstehender Nothalt des Kraftfahrzeugs 105 erfasst. Beispielsweise kann ein technischer Defekt an Bord des Kraftfahrzeugs 105 erfasst werden, etwa ein Reifen- oder Motorschaden. Bevorzugt wird in einem Schritt 310 ein Fahrzustand des Kraftfahrzeugs 105 bestimmt. Der Fahrzustand kann insbesondere eine Geschwindigkeit oder eine Beschleunigung des Kraftfahrzeugs 105 umfassen. In einer weiteren Ausführungsform umfasst der Fahrzustand eine Dringlichkeit des Anhaltens aus dem Schritt 305. Die Dringlichkeit kann daran gekoppelt sein, wie groß ein Schadensrisiko ist, wenn das Kraftfahrzeug 105 nicht angehalten wird oder daran, wie groß ein verbleibender Aktionsradius des Kraftfahrzeugs 105 ist.

In einem Schritt 315 können umliegende Elemente statisch bestimmt werden. Dazu können insbesondere Karteninformationen, beispielsweise des Speichers 225, ausgewertet werden. Die statischen Informationen können insbesondere straßen- oder wegebezogene Informationen umfassen.

In einem Schritt 320 kann auch beispielsweise mittels der Abtasteinrichtung 230 ein Umfeld des Kraftfahrzeugs 105 abgetastet werden. Auf diese Weise können dynamische Umgebungsinformationen des Kraftfahrzeugs 105 bestimmt werden.

In einem Schritt 325 können potentielle Haltepunkte im Bereich des Kraftfahrzeugs 105 identifiziert werden. Die Haltepunkte können insbesondere auf der Basis der zuvor bestimmten statischen und/oder dynamischen Informationen gewählt werden. Im Allgemeinen liegen die potentiellen Haltepunkte bezüglich des Kraftfahrzeugs 105 in Bewegungsrichtung, weiter bevorzugt entlang der ursprünglich beabsichtigen Trajektorie 120 (vgl. Figur 1).

In einem Schritt 330 kann auf der Basis der potentiellen Haltepunkte ein Nothaltepunkt 125 bestimmt werden. Dazu kann jedem potentiellen Haltepunkt auf der Basis der statisch und/oder dynamisch bestimmten Informationen ein Halterisiko zugeordnet werden, wie oben genauer ausgeführt ist. Der Nothaltepunkt 125 kann dann insbesondere auf der Basis des bestimmten Fahrzustands möglichst optimal gewählt werden. Dabei ist das Halterisiko am gewählten Nothaltepunkt 125 möglichst minimal unter den zuvor bestimmten potentiellen Haltepunkten. Zusätzliche Einflussfaktoren bei der Auswahl des Nothaltepunkts 125 sind ebenfalls oben genauer nachzulesen.

Der bestimmte Nothaltepunkt 125 kann ausgegeben werden, beispielsweise mittels der zweiten Schnittstelle 215, oder das Anhalten des Kraftfahrzeugs 105 am ausgewählten Nothaltepunkt 125 kann in einem Schritt 335 des Verfahrens 300 durchgeführt werden. In einer Ausführungsform kann dabei das Verfahren 300 auch teilweise erneut durchlaufen, um eine fortlaufende Optimierung des gewählten Nothaltepunkts 125, insbesondere bezüglich seines zugeordneten Halterisikos, zu verwirklichen. Erweist sich beispielsweise der gewählte Nothaltepunkt 125 aufgrund von dynamischen Ereignissen bei der Annäherung des Kraftfahrzeugs 105 als riskanter als ursprünglich angenommen, so kann eine erneute Suche nach einem besseren Nothaltepunkt 125 ausgelöst werden. Auch wenn sich beispielsweise während der Annäherung an den ausgewählten Nothaltepunkt 125 herausstellt, dass der Aktionsradius des Kraftfahrzeugs 105 größer als zunächst angenommen ist, sodass ein etwas weiter entfernter Nothaltepunkt 125 mit einem geringeren zugeordneten Halterisiko doch erreicht werden kann, kann das Kraftfahrzeug 105 vorteilhaft zum günstigeren Nothaltepunkt 125 geführt werden.

## Patentansprüche

1. Verfahren (300) zum Bestimmen eines Nothaltepunkts (125) eines Kraftfahrzeugs (105), wobei das Verfahren (300) folgende Schritte umfasst:
- Bestimmen (310) eines Fahrzustands des Kraftfahrzeugs (105);
- Bestimmen (330) eines Nothaltepunkts (125) im Bereich des Kraftfahrzeugs (105) auf der Basis des Fahrzustands;
**dadurch gekennzeichnet, dass**
- der Nothaltepunkt (125) derart bestimmt wird, dass ein Halterisiko am bestimmten Nothaltepunkt (125) einen vorbestimmten Wert nicht übersteigt, wobei der Wert in Abhängigkeit des Fahrzustands bestimmt (330) wird.

2. Verfahren (300) nach Anspruch 1, wobei der Fahrzustand eine Geschwindigkeit des Kraftfahrzeugs (105) umfasst.

3. Verfahren (300) nach Anspruch 1 oder 2, wobei der Fahrzustand eine Dringlichkeit des Anhaltens umfasst.

4. Verfahren (300) nach einem der vorangehenden Ansprüche, wobei das Halterisiko am Nothaltepunkt (125) ein Risiko für einen zusätzlichen Schaden am Kraftfahrzeug (105) oder einem seiner Insassen umfasst.

5. Verfahren (300) nach einem der vorangehenden Ansprüche, wobei das Halterisiko am Nothaltepunkt (125) ein Risiko für einen Schaden an einem weiteren Verkehrsteilnehmer umfasst.

6. Verfahren (300) nach einem der vorangehenden Ansprüche, wobei das Halterisiko am Nothaltepunkt (125) auf der Basis von Umgebungsdaten des Nothaltepunkts (125) aus Kartendaten bestimmt (330) wird.

7. Verfahren (300) nach einem der vorangehenden Ansprüche, ferner umfassend ein Abtasten (320) von Umgebungsdaten des Nothaltepunkts (125), wobei das Halterisiko am Nothaltepunkt (125) auf der Basis der abgetasteten Umgebungsdaten bestimmt (330) wird.

8. Verfahren (300) nach einem der vorangehenden Ansprüche, wobei das Halterisiko auf der Basis einer Abtastung einer Umgebung des Kraftfahrzeugs (105) bestimmt (330) wird.

9. Vorrichtung (200) zur Bestimmung eines Nothaltepunkts (125) eines Kraftfahrzeugs (105), wobei die Vorrichtung (200) folgendes umfasst:
- eine Bestimmungseinrichtung (210), die zur Bestimmung eines Fahrzustands des Kraftfahrzeugs (105) eingerichtet ist;
- eine Verarbeitungseinrichtung (205), die dazu eingerichtet ist, auf der Basis des Fahrzustands einen Nothaltepunkt (125) im Bereich des Kraftfahrzeugs (105) zu bestimmen,
- wobei die Verarbeitungseinrichtung (205) ferner dazu eingerichtet ist, den Nothaltepunkt (125) derart zu bestimmen, dass ein Halterisiko am bestimmten Nothaltepunkt (125) einen vorbestimmten Wert nicht übersteigt, wobei die Verarbeitungseinrichtung (205) bei der Bestimmung des Werts den Fahrzustand berücksichtigt.

10. Vorrichtung (200) nach Anspruch 9, wobei die Verarbeitungseinrichtung (205) ferner dazu eingerichtet ist, ein Anhalten des Kraftfahrzeugs (105) am bestimmten Nothaltepunkt (125) zu steuern.

## Claims

1. Method (300) for determining an emergency stopping point (125) of a motor vehicle (105), the method (300) comprising the following steps:
- determining (310) a driving state of the motor vehicle (105);
- determining (330) an emergency stopping point (125) in the region of the motor vehicle (105) on the basis of the driving state;
**characterized in that**
- the emergency stopping point (125) is determined in such a way that a risk caused by stopping at the determined emergency stopping point (125) does not exceed a predetermined value, the value being determined (330) in dependence on the driving state.

2. Method (300) according to Claim 1, the driving state comprising a speed of the motor vehicle (105).

3. Method (300) according to Claim 1 or 2, the driving state comprising an urgency to stop.

4. Method (300) according to one of the preceding claims, the risk caused by stopping at the emergency stopping point (125) comprising a risk of additional damage to the motor vehicle (105) or harm to one of its occupants.

5. Method (300) according to one of the preceding claims, the risk caused by stopping at the emergency stopping point (125) comprising a risk of damage to another road user.

6. Method (300) according to one of the preceding claims, the risk caused by stopping at the emergency stopping point (125) being determined (330) on the basis of environmental data of the emergency stopping point (125) from map data.

7. Method (300) according to one of the preceding claims, also comprising a scanning (320) of environmental data of the emergency stopping point (125), the risk caused by stopping at the emergency stopping point (125) being determined (330) on the basis of the scanned environmental data.

8. Method (300) according to one of the preceding claims, the risk caused by stopping being determined (330) on the basis of a scanning of a surrounding environment of the motor vehicle (105).

9. Apparatus (200) for determining an emergency stopping point (125) of a motor vehicle (105), the apparatus (200) comprising the following:
- a determining device (210), which is designed for determining a driving state of the motor vehicle (105);
- a processing device (205), which is designed to determine an emergency stopping point (125) in the region of the motor vehicle (105) on the basis of the driving state,
- the processing device (205) also being designed to determine the emergency stopping point (125) in such a way that a risk caused by stopping at the determined emergency stopping point (125) does not exceed a predetermined value, the processing device (205) taking the driving state into account in the determination of the value.

10. Apparatus (200) according to Claim 9, the processing device (205) also being designed to control stopping of the motor vehicle (105) at the determined emergency stopping point (125).

## Revendications

1. Procédé (300) pour la détermination d'un point d'arrêt d'urgence (125) d'un véhicule automobile (105), le procédé (300) comprenant les étapes suivantes :
- la détermination (310) d'un état de conduite du véhicule automobile (105) ;
- la détermination (330) d'un point d'arrêt d'urgence (125) dans la zone du véhicule automobile (105) sur la base de l'état de conduite ;
**caractérisé en ce que**
- le point d'arrêt d'urgence (125) est déterminé de telle sorte qu'un risque d'arrêt au point d'arrêt d'urgence déterminé (125) ne dépasse pas une valeur prédéterminée, la valeur étant déterminée (330) en fonction de l'état de conduite.

2. Procédé (300) selon la revendication 1, dans lequel l'état de conduite comprend une vitesse du véhicule automobile (105).

3. Procédé (300) selon la revendication 1 ou 2, dans lequel l'état de conduite comprend une urgence de l'arrêt.

4. Procédé (300) selon l'une quelconque des revendications précédentes, dans lequel le risque d'arrêt au point d'arrêt d'urgence (125) comprend un risque de dommage supplémentaire au véhicule automobile (105) ou à l'un de ses occupants.

5. Procédé (300) selon l'une quelconque des revendications précédentes, dans lequel le risque d'arrêt au point d'arrêt d'urgence (125) comprend un risque de dommage à un autre usager de la route.

6. Procédé (300) selon l'une quelconque des revendications précédentes, dans lequel le risque d'arrêt au point d'arrêt d'urgence (125) est déterminé (330) sur la base de données environnementales du point d'arrêt d'urgence (125) à partir de données cartographiques.

7. Procédé (300) selon l'une quelconque des revendications précédentes, comprenant en outre un balayage (320) de données environnementales du point d'arrêt d'urgence (125), le risque d'arrêt au point d'arrêt d'urgence (125) étant déterminé (330) sur la base des données environnementales balayées.

8. Procédé (300) selon l'une quelconque des revendications précédentes, dans lequel le risque d'arrêt est déterminé (330) sur la base d'un balayage d'un environnement du véhicule automobile (105).

9. Dispositif (200) pour la détermination d'un point d'arrêt d'urgence (125) d'un véhicule automobile (105), le dispositif (200) comprenant les éléments suivants :
- un appareil de détermination (210), qui est conçu pour déterminer un état de conduite du véhicule automobile (105) ;
- un appareil de traitement (205), qui est conçu pour déterminer, sur la base de l'état de conduite, un point d'arrêt d'urgence (125) dans la zone du véhicule automobile (105),
- l'appareil de traitement (205) étant en outre conçu pour déterminer le point d'arrêt d'urgence (125) de telle sorte qu'un risque d'arrêt au point d'arrêt d'urgence déterminé (125) ne dépasse pas une valeur prédéterminée, l'appareil de traitement (205) tenant compte de l'état de conduite lors de la détermination de la valeur.

10. Dispositif (200) selon la revendication 9, dans lequel l'appareil de traitement (205) est en outre conçu pour commander un arrêt du véhicule automobile (105) au point d'arrêt d'urgence déterminé (125).
